# EUROPEAN PATENT APPLICATION

(11) **EP 4 697 731 A1**
(43) Date of publication of application: **18.02.2026**
(21) Application number: 23951412.8
(22) Date of filing: 04.09.2023
(51) Int. Cl.: H04N 21/431, H04N 21/435

(54) **INFORMATION PROCESSING SYSTEM, INFORMATION PROCESSING SYSTEM CONTROL METHOD, AND PROGRAM**

(71) Applicant: Pioneer Corporation, Tokyo 113-0021 (JP)
(72) Inventor: TOKOI Akinori, Tokyo 170-0013 (JP)
(74) Representative: Vossius & Partner Patentanwälte Rechtsanwälte mbB
(86) International application number: PCT/JP2023/032194
(87) International publication number: WO 2025/052507

(57) **Abstract**

A video information acquisition unit (10) acquires video information related to a video captured by an imaging device (3) that moves together with a vehicle (4). A motion information acquisition unit (20) acquires motion information related to a motion of a vehicle (4) when the imaging device (3) captures a video. A display control unit (30) displays an image based on the video information on a user terminal (2) located outside a vehicle (4). A display control unit (30) controls a display mode of an image to be displayed on the user terminal (2) by using the motion information.

## Description

### TECHNICAL FIELD

The present invention relates to an information processing system, an information processing system control method, and a program.

### BACKGROUND ART

Patent Document 1 discloses a technique of displaying a video of a front side of a vehicle on an external terminal.

### RELATED DOCUMENT

### PATENT DOCUMENT

Patent Document 1: Japanese Unexamined Patent Publication No. 2016-213791

### SUMMARY OF THE INVENTION

### TECHNICAL PROBLEM

In the case of the Patent Document 1, the information on the vehicle that can be obtained by the user outside the vehicle is the video of the vehicle, the voice in the vehicle, the position information of the vehicle, and the like, and it is difficult for the user outside the vehicle to have a sense of actually riding on the vehicle.

An object of the present invention is to provide an information processing system that can give the user a sense of presence as if riding in a vehicle even in a case where the user is outside the vehicle.

### SOLUTION TO PROBLEM

The invention according to claim 1 is an information processing system including a video information acquisition unit that acquires video information related to a video captured by an imaging device that moves together with a vehicle, a motion information acquisition unit that acquires motion information related to a motion of the vehicle when the imaging device captures the video, and a display control unit that causes a user terminal located outside the vehicle to display an image based on the video information, in which the display control unit controls a display mode of the image to be displayed on the user terminal, using the motion information.

The invention according to claim 9 is an information processing system control method including, via a computer, acquiring video information regarding a video captured by an imaging device that moves together with a vehicle, acquiring motion information regarding a motion of the vehicle when the imaging device captures the video, displaying an image based on the video information on a user terminal located outside the vehicle, and controlling a display mode of the image to be displayed on the user terminal, using the motion information.

The invention according to claim 10 is a program causing a computer to execute a procedure of acquiring video information regarding a video captured by an imaging device that moves together with a vehicle, a procedure of acquiring motion information regarding a motion of the vehicle when the imaging device captures the video, a procedure of displaying an image based on the video information on a user terminal located outside the vehicle, and a procedure of controlling a display mode of the image to be displayed on the user terminal using the motion information.

### BRIEF DESCRIPTION OF THE DRAWINGS

[FIG. 1] a block diagram for describing an information processing system according to a first embodiment.
[FIG. 2] a diagram showing an image based on video information displayed on a user terminal.
[FIG. 3] a diagram showing a hardware configuration example of the information processing device.
[FIG. 4] a flowchart showing processing of the information processing system according to the first embodiment.
[FIG. 5] a block diagram for describing an information processing system according to a second embodiment.
[FIG. 6] a flowchart showing processing of the information processing system according to the second embodiment.
[FIG. 7] a block diagram for describing an information processing system according to a third embodiment.
[FIG. 8] a diagram showing a motion state information example 1 added to an image based on video information.
[FIG. 9] a diagram showing a motion state information example 2 added to an image based on video information.
[FIG. 10] a diagram showing a motion state information example 3 added to an image based on video information.
[FIG. 11] a diagram showing a motion state information example 4 added to an image based on video information.
[FIG. 12] a diagram showing a motion state information example 5 added to an image based on video information.
[FIG. 13] a diagram showing blur processing example 1 performed on an image based on video information.
[FIG. 14] a diagram showing blur processing example 2 performed on an image based on video information.
[FIG. 15] a diagram showing a state in which an image based on video information is rotated.
[FIG. 16] a flowchart showing processing of the information processing system according to the third embodiment.

### ADESCRIPTION OF EMBODIMENTS

Hereinafter, a description will be made for an embodiment of the present invention using the drawings. In all drawings, the same components are designated by the same reference numerals, and the description thereof will not be repeated.

In the following description, each component of each device is represented as a block of a functional unit, not as a hardware unit configuration. Each component of each device is implemented with any combination of software and hardware centering on a CPU, a memory, a program loaded in the memory, a storage medium such as a hard disk for storing the program, and an interface for network connection of any computer. There are various modification examples in an implementation method of the component and the device.

### <First Embodiment>

### (Information processing system 100A)

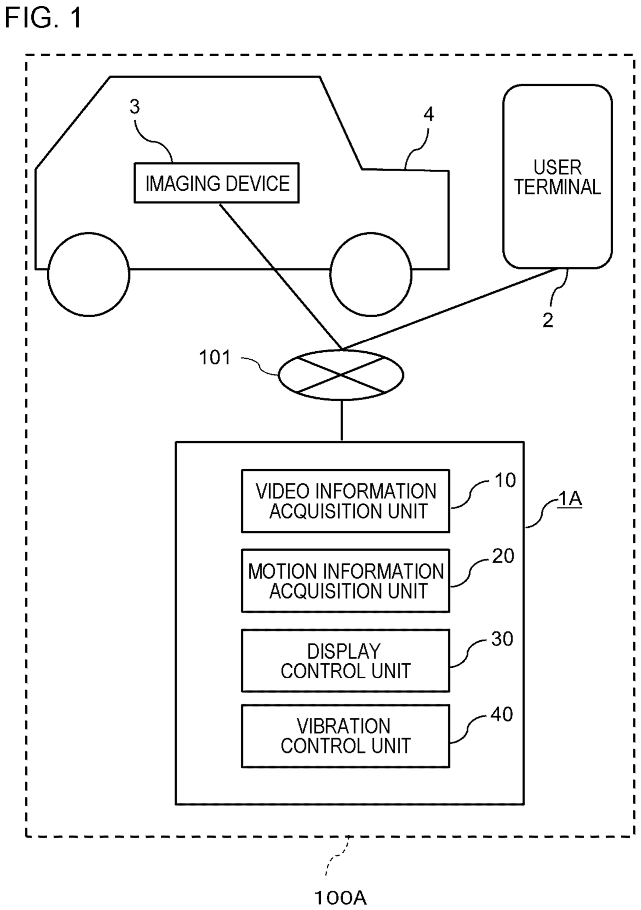

FIG. 1 is a block diagram for describing an information processing system 100A according to a first embodiment. An information processing device 1A, a user terminal 2, and an imaging device 3 are used in the information processing system 100A according to the first embodiment. In the first embodiment, the information processing device 1A is provided outside a vehicle 4. The information processing device 1A may be a so-called cloud server.

The information processing device 1A is configured to communicate with a user terminal 2 (described below) and an imaging device 3 (described below) via a communication network 101. The communication network 101 includes, for example, communication over a 4G or 5G line. The information processing device 1A includes an external vehicle communication unit (not shown) for configuring the communication network 101.

### (Imaging Device 3)

An imaging device 3 is mounted on the vehicle 4. In the first embodiment, the imaging device 3 is inside the vehicle 4. The imaging device 3 may be provided outside the vehicle 4. The imaging device 3 may be brought in from the outside of the vehicle 4 or may be attached to the vehicle 4 in advance. The imaging device 3 moves together with the vehicle 4.

In the first embodiment, the imaging device 3 images a front side (traveling direction) of the vehicle 4. The imaging device 3 may image a width direction (lateral direction) of the vehicle 4 or a rear side of the vehicle 4. The imaging device 3 generates video information related to the captured video. The imaging device 3 may include a sound collection unit (not shown), generate voice information related to a voice inside the vehicle 4 acquired by the sound collection unit, and transmit the voice information to the information processing device 1A. In addition, the imaging device 3 may transmit motion information (described below) related to the motion of the vehicle 4 to the information processing device 1A.

The imaging device 3 is configured to communicate with the information processing device 1A via the communication network 101. The communication network 101 includes, for example, communication over a 4G or 5G line. The imaging device 3 includes an external vehicle communication unit (not shown) for configuring the communication network 101. The imaging device 3 and the information processing device 1A may communicate with each other using Web Real-Time Communication (WebRTC).

### (User Terminal 2)

The user terminal 2 is located outside the vehicle 4. The user terminal 2 is a terminal of a user outside the vehicle 4, and is a terminal owned, managed, carried, or used by the user outside the vehicle 4. The user terminal 2 includes any of a smartphone, a tablet, or a personal computer (PC).

A user application program used in the information processing system 100A is installed in the user terminal 2. The user starts the application on the user terminal 2 and uses the application. Details of the application will be described later.

The user terminal 2 is configured to communicate with the information processing device 1A via the communication network 101. The communication network 101 includes, for example, communication over a 4G or 5G line. The user terminal 2 includes an external vehicle communication unit (not shown) for configuring the communication network 101. The user terminal 2 and the information processing device 1A may communicate with each other using web real-time communication (WebRTC).

### (Video Information Acquisition Unit 10)

The information processing device 1A according to the first embodiment includes a video information acquisition unit 10, a motion information acquisition unit 20, a display control unit 30, and a vibration control unit 40. The video information acquisition unit 10 acquires video information related to the video captured by the imaging device 3. In the first embodiment, the video information includes, for example, a video in which the front direction (traveling direction) of the vehicle 4 is imaged.

### (Display Control Unit 30)

The display control unit 30 displays an image based on the video information on the user terminal 2. The "image based on the video information" may be a video. The "image based on the video information" may include a video in which a frame rate of the video captured by the imaging device 3 is lowered.

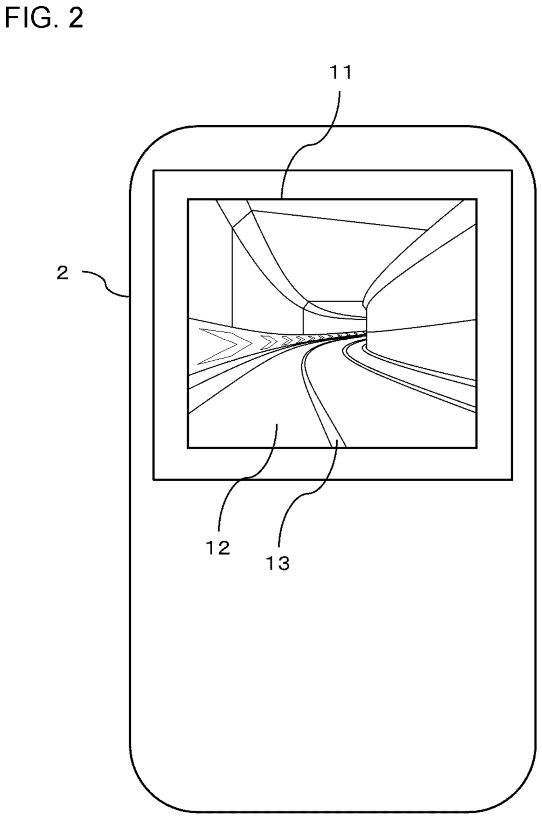

FIG. 2 is a diagram showing an image 11 based on the video information displayed on the user terminal 2. In FIG. 2, the imaging device 3 images the front side of the vehicle 4, and the display control unit 30 displays the video captured by the imaging device 3 on the display of the user terminal 2 in real time. It should be noted that the real time does not need to be completely simultaneous, and there may be a time difference of several seconds to several tens of seconds. In FIG. 2, the display control unit 30 displays, on the user terminal 2, a video of the vehicle 4 traveling through the tunnel approaching a right-hand curve. Reference numeral 12 in FIG. 2 indicates a single-lane road 12, and reference numeral 13 in FIG. 2 indicates a lane-marking line 13. In addition to the video captured by the imaging device 3, map information indicating the current position of the vehicle 4, speed information indicating the current traveling speed of the vehicle 4, and the like may be simultaneously displayed on the display of the user terminal 2.

In a case where the user activates the application for the user from the user terminal 2, the user terminal 2 can exhibit a function of displaying the image 11 based on the video information on the user terminal 2.

### (Motion Information Acquisition Unit 20)

Returning to FIG. 1, the motion information acquisition unit 20 acquires the motion information transmitted from the vehicle 4. The motion information is information related to a motion of the vehicle 4 when the imaging device 3 has captured a video. The motion information is information related to a motion of the vehicle 4 when the imaging device 3 is capturing a video. The motion information is information related to a motion of the vehicle 4 when the image 11 (see FIG. 2) based on the video information is being displayed on the user terminal 2 in real time.

The motion information includes at least one of acceleration information related to an acceleration of the vehicle 4 and rotation speed information related to a rotation speed of an engine of the vehicle 4. The acceleration of the vehicle 4 includes at least one of an acceleration of the vehicle 4 in a traveling direction of the vehicle 4, an acceleration of the vehicle 4 in a width direction (lateral direction) of the vehicle 4, and an acceleration of the vehicle 4 in a vertical direction. The acceleration information may be generated by a three-axis acceleration sensor (not shown) mounted on the vehicle 4 or the imaging device 3. In addition, the rotation speed of the engine may also be generated by an engine rotation speed sensor (not shown) mounted on the vehicle 4. The imaging device 3 may transmit the acceleration information and the rotation speed information acquired via an on-board diagnostics (OBD) interface of the vehicle 4 to the information processing device 1A, and the motion information acquisition unit 20 may acquire the motion information transmitted from the imaging device 3.

### (Vibration Control Unit 40)

The vibration control unit 40 controls the vibration of the user terminal 2 using the motion information. The vibration control unit 40 controls the vibration of the user terminal 2 by adjusting at least one of an interval at which the user terminal 2 vibrates and a vibration continuation time of the user terminal 2.

In the first embodiment, in a case where the acceleration of the vehicle 4 increases or the rotation speed of the engine of the vehicle 4 increases, the vibration control unit 40 may control the vibration of the user terminal 2 such that a vibration interval of the user terminal 2 is shortened. In addition, in a case where the acceleration of the vehicle 4 increases or the rotation speed of the engine of the vehicle 4 increases, the vibration control unit 40 may control the vibration of the user terminal 2 such that a vibration continuation time of the user terminal 2 increases. In addition, for example, in a case where an engine rotation speed is low, the vibration interval may be set to a long pulse interval, and the pulse interval may be shortened as the engine rotation speed increases.

### (Hardware Configuration Example)

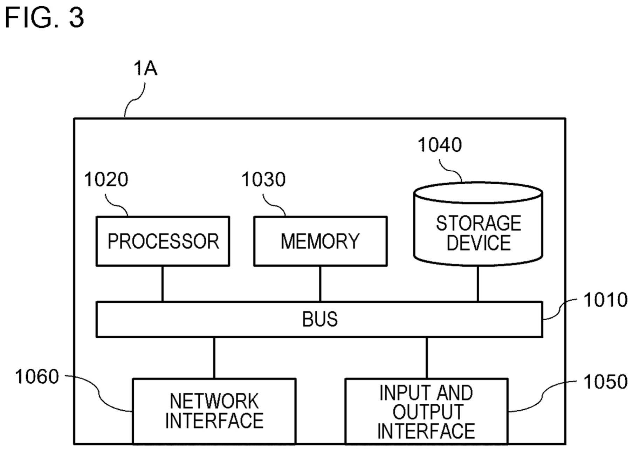

FIG. 3 is a diagram showing a hardware configuration example of the information processing device 1A. The information processing device 1A includes a bus 1010, a processor 1020, a memory 1030, a storage device 1040, an input and output interface 1050, and a network interface 1060.

The bus 1010 is a data transmission path for transmitting and receiving data between the processor 1020, the memory 1030, the storage device 1040, the input and output interface 1050, and the network interface 1060. However, a method for connecting the processor 1020 or the like is not limited to bus connection.

The processor 1020 is a processor implemented with a central processing unit (CPU), a graphics processing unit (GPU), or the like.

The memory 1030 is a main storage device that is implemented using a random access memory (RAM) or the like.

The storage device 1040 is an auxiliary storage device implemented using a hard disk drive (HDD), a solid state drive (SSD), removable media such as a memory card, a read only memory (ROM), or the like, and has a recording medium. The recording medium of the storage device 1040 stores program modules that realize each function (for example, the video information acquisition unit 10, the motion information acquisition unit 20, the display control unit 30, and the vibration control unit 40) of the information processing device 1A. The processor 1020 reads and executes each of the program modules on the memory 1030, so that each function corresponding to the program module is implemented. In addition, the storage device 1040 may function as a storage unit (not shown) included in the information processing device 1A.

The input and output interface 1050 is an interface for connecting the information processing device 1A and various input and output devices.

The network interface 1060 is an interface for connecting the information processing device 1A to a network. The network is, for example, a local area network (LAN) or a wide area network (WAN). A method for connecting the network interface 1060 to the network may be a wireless connection or a wired connection. The information processing device 1A may communicate with the user terminal 2 and the imaging device 3 via the network interface 1060.

### (Operation Example of First Embodiment)

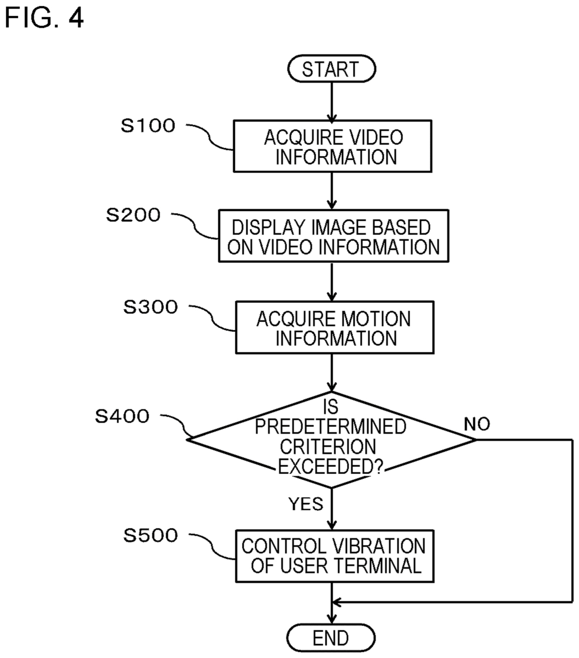

FIG. 4 is a flowchart showing processing of the information processing system 100A according to the first embodiment. First, in step S100, the video information acquisition unit 10 acquires the video information captured by the imaging device 3. In the first embodiment, the imaging device 3 images the front side of the vehicle 4, and the video information acquisition unit 10 acquires the video information related to the front side of the vehicle 4.

Next, in step S200, the display control unit 30 displays the image 11 (see FIG. 2) based on the video information captured by the imaging device 3 in real time on the user terminal 2. As a result, the user can share the scenery in front of the vehicle 4 with the driver even in a case where the user is outside the vehicle 4.

Next, in step S300, the motion information acquisition unit 20 acquires the motion information. For example, the motion information acquisition unit 20 acquires an acceleration of the vehicle 4 in the vertical direction or an engine rotation speed as the motion information transmitted from the vehicle 4.

In step S400, the motion information acquisition unit 20 determines whether or not the motion information acquired in step S300 exceeds a predetermined criterion. For example, in a case where the acquired motion information is the acceleration of the vehicle 4 in the vertical direction, assuming that a threshold value of the acceleration is 3 [m/s²], when the acceleration of the vehicle 4 in the vertical direction acquired in step S300 as a motion information is 7 [m/s²], the motion information acquisition unit 20 may determine that the motion information acquired in step S300 exceeds a predetermined criterion. In addition, in a case where the acquired motion information is the engine rotational speed of the vehicle 4, assuming that the threshold value of the engine rotational speed is 4000 [rpm], when the engine rotational speed of the vehicle 4 acquired in step S300 as a motion information is 4500 [rpm], the motion information acquisition unit 20 may determine that the motion information acquired in step S300 exceeds a predetermined criterion.

In a case where the motion information acquired in step S300 exceeds the predetermined criterion (YES in step S400), the process proceeds to step S500. In a case where the motion information acquired in step S300 does not exceed the predetermined criterion (NO in step S400), the processing may be ended. Step S400 may be omitted.

In step S500, the vibration control unit 40 controls the vibration of the user terminal 2. The vibration control unit 40 may control a vibration function of the user terminal 2. The vibration control unit 40 may control at least one of a vibration interval in a case where the user terminal 2 is intermittently vibrated and a vibration continuation time in a case where the user terminal 2 is continuously vibrated, in accordance with a magnitude of an acceleration of the vehicle 4 in the vertical direction. The vibration control unit 40 may shorten the vibration interval of the user terminal 2 or may lengthen the vibration continuation time of the user terminal 2 as the acceleration of the vehicle 4 in the vertical direction is larger. Alternatively, in step S500, the vibration control unit 40 may control at least one of a vibration interval in a case where the user terminal 2 is intermittently vibrated and a vibration continuation time in a case where the user terminal 2 is continuously vibrated, in accordance with the height of the engine rotation speed of the vehicle 4. The vibration control unit 40 may shorten the vibration interval of the user terminal 2 or may lengthen the vibration continuation time of the user terminal 2 as the engine rotation speed of the vehicle 4 is higher.

As described above, the information processing system 100A according to the first embodiment includes the video information acquisition unit 10, the motion information acquisition unit 20, the display control unit 30, and the vibration control unit 40. Since the user terminal 2 vibrates in accordance with the actual motion (acceleration, engine rotation speed) of the vehicle 4, the user can experience the vibration of the vehicle 4 in a simulated manner as if the user is riding on the vehicle 4. Therefore, the user can obtain a sense of presence as if the user were actually riding on the vehicle 4 even outside the vehicle 4.

Further, the motion information includes at least one of acceleration information related to an acceleration of the vehicle and rotation speed information related to a rotation speed of an engine of the vehicle. Accordingly, it is possible to easily acquire information related to the vibration of the vehicle 4.

Further, the acceleration of the vehicle 4 includes the acceleration of the vehicle 4 in the vertical direction. As a result, for example, in a case where the vehicle 4 vibrates in the vertical direction due to the road level difference, the user can experience the vibration caused by the road level difference in a simulated manner.

Further, the vibration control unit 40 controls the vibration of the user terminal by adjusting at least one of an interval at which the user terminal 2 vibrates and a vibration continuation time of the user terminal 2. As a result, the vibration of the actual vehicle 4 can be effectively expressed by the user terminal 2.

### <Second Embodiment>

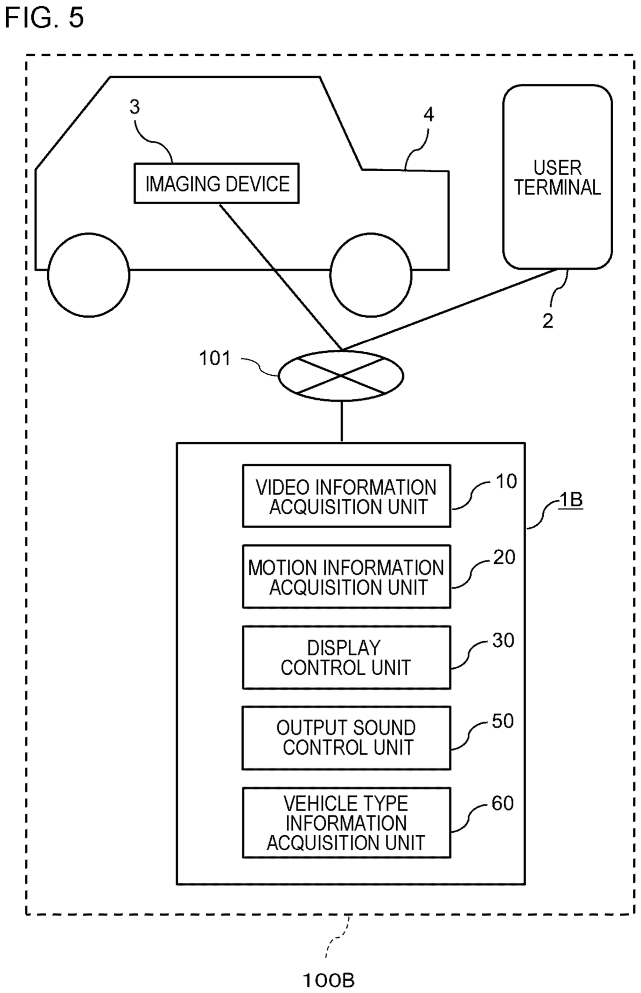

FIG. 5 is a block diagram for describing an information processing system 100B according to a second embodiment. The information processing system 100B according to the second embodiment does not include the vibration control unit 40, and includes the output sound control unit 50 and the vehicle type information acquisition unit 60. Functions other than the output sound control unit 50 and the vehicle type information acquisition unit 60 are the same as those in the first embodiment.

### (Output Sound Control Unit 50)

The output sound control unit 50 controls the sound to be output to the user terminal 2 by using the motion information. In the second embodiment, the sound is an engine sound. The engine sound may be a pseudo engine sound that imitates an actual engine sound of the vehicle 4. The engine sound may be stored in advance in the storage unit (not shown) as an engine sound file. The output sound control unit 50 according to the second embodiment outputs the engine sound as the sound to the user terminal 2.

The output sound control unit 50 changes the engine sound in accordance with at least one of acceleration information related to an acceleration in a traveling direction of the vehicle 4 and rotation speed information related to a rotation speed of the engine of the vehicle 4.

In the second embodiment, for example, the output sound control unit 50 may control the engine sound output to the user terminal 2 such that a reproduction speed of the engine sound output to the user terminal 2 increases as the rotation speed of the engine of the vehicle 4 increases. Alternatively, in a scene where the acceleration in the traveling direction of the vehicle 4 is large, the output sound control unit 50 may control the engine sound output to the user terminal 2 such that the reproduction speed of the engine sound output to the user terminal 2 is higher as the acceleration in the traveling direction of the vehicle 4 is higher, by regarding that the rotation speed of the engine of the vehicle 4 is high. By increasing the reproduction speed of the engine sound according to the rotation speed of the engine of the vehicle 4 or the acceleration in the traveling direction of the vehicle 4, the high rotation sound of the actual engine of the vehicle 4 can be reproduced. Therefore, for example, the user can experience a sense of acceleration of the vehicle 4.

### (Vehicle Type Information Acquisition Unit 60)

The vehicle type information acquisition unit 60 acquires vehicle type information related to the vehicle type of the vehicle 4. The vehicle type information includes information on what type (model) of the vehicle 4 is. The vehicle type information may include, for example, information on a classification of vehicles such as a normal vehicle and a light vehicle. The vehicle type information may include, for example, information related to a category of a vehicle, such as a sports car, a sedan, and a van, of the vehicle 4. In addition, the vehicle type information may include, for example, a specific manufacturer name (for example, Ferrari (registered trademark) and Lamborghini (registered trademark)) or a product name (for example, Ferrari 458).

The output sound control unit 50 controls the sound using the vehicle type information. Specifically, for example, in a case where the output sound control unit 50 acquires information regarding a product name (for example, Ferrari 458) as the vehicle type information acquired by the vehicle type information acquisition unit 60, the output sound control unit 50 selects a file of an engine sound corresponding to the product name and outputs the engine sound to the user terminal 2.

The hardware configuration of the information processing device 1A according to the second embodiment is the same as that of the first embodiment.

### (Operation Example of Second Embodiment)

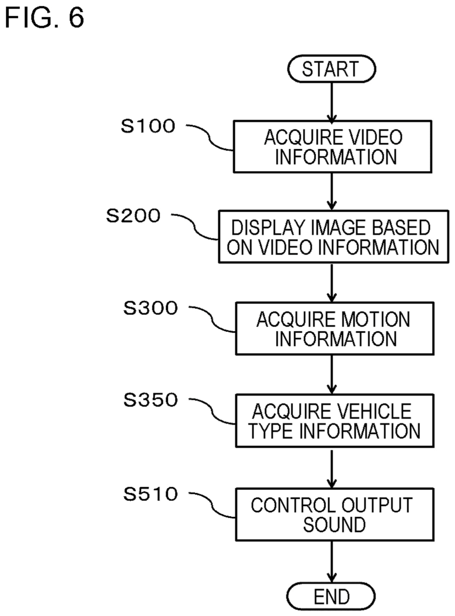

FIG. 6 is a flowchart showing processing of an information processing system 100B according to the second embodiment. Steps S100 to S300 are the same as those in the first embodiment.

In step S350 after step S300, the vehicle type information acquisition unit 60 acquires the vehicle type information. In the second embodiment, for example, it is assumed that the vehicle type information acquisition unit 60 acquires information on a product name (for example, Ferrari 458) of the vehicle 4 as the vehicle type information.

In step S510 after step S350, the output sound control unit 50 controls the sound to be output to the user terminal 2 by using the motion information and the vehicle type information. In step S510, the output sound control unit 50 acquires the engine sound file corresponding to the Ferrari 458 from the storage unit (not shown) by using the product name (for example, Ferrari 458) of the vehicle 4 as the vehicle type information acquired in step S350, and causes the user terminal 2 to output the engine sound stored in the sound file to the user terminal 2. Then, the output sound control unit 50 reproduces the sound file at a reproduction speed corresponding to the rotation speed of the engine of the vehicle 4 by using the rotation speed information related to the rotation speed of the engine of the vehicle 4 as the motion information acquired in step S300. In the second embodiment, for example, the output sound control unit 50 may control the engine sound output to the user terminal 2 such that the reproduction speed of the engine sound output to the user terminal 2 is higher as the rotation speed of the engine of the vehicle 4 is higher.

Alternatively, in step S510, the output sound control unit 50 may control the reproduction speed of the engine sound file by using acceleration information related to the traveling direction of the vehicle 4 as the motion information acquired in step S300, instead of controlling the reproduction speed of the engine sound file by using the rotation speed information related to the rotation speed of the engine of the vehicle 4 as the motion information acquired in step S300. That is, the output sound control unit 50 may control the engine sound output to the user terminal 2 such that the reproduction speed of the engine sound output to the user terminal 2 is higher as the acceleration in the traveling direction of the vehicle 4 is higher, by regarding that the rotation speed of the engine of the vehicle 4 is higher as the acceleration in the traveling direction of the vehicle 4 is higher.

As described above, the information processing system 100B according to the second embodiment includes the video information acquisition unit 10, the motion information acquisition unit 20, the display control unit 30, and the output sound control unit 50. Since the engine sound output from the user terminal 2 changes according to the actual motion (acceleration, engine rotation speed) of the vehicle 4, the user can obtain a sense of presence as if the user were actually riding on the vehicle 4 even outside the vehicle 4.

Further, the motion information includes at least one of acceleration information related to an acceleration of the vehicle and rotation speed information related to a rotation speed of an engine of the vehicle. Accordingly, it is possible to easily acquire information related to the engine of the vehicle 4.

Further, the output sound control unit changes the engine sound according to at least one of the acceleration information and the rotation speed information. As a result, the actual engine sound of the vehicle 4 can be effectively reproduced by the user terminal 2.

Furthermore, the information processing system 100B according to the second embodiment further includes a vehicle type information acquisition unit 60. As a result, it is possible to select and reproduce the engine sound file corresponding to the vehicle type information, and it is possible to effectively reproduce the actual engine sound of the vehicle 4 on the user terminal 2. Therefore, the user can more effectively obtain a sense of presence as if the user were actually riding on the vehicle 4 even outside the vehicle 4.

### <Third Embodiment>

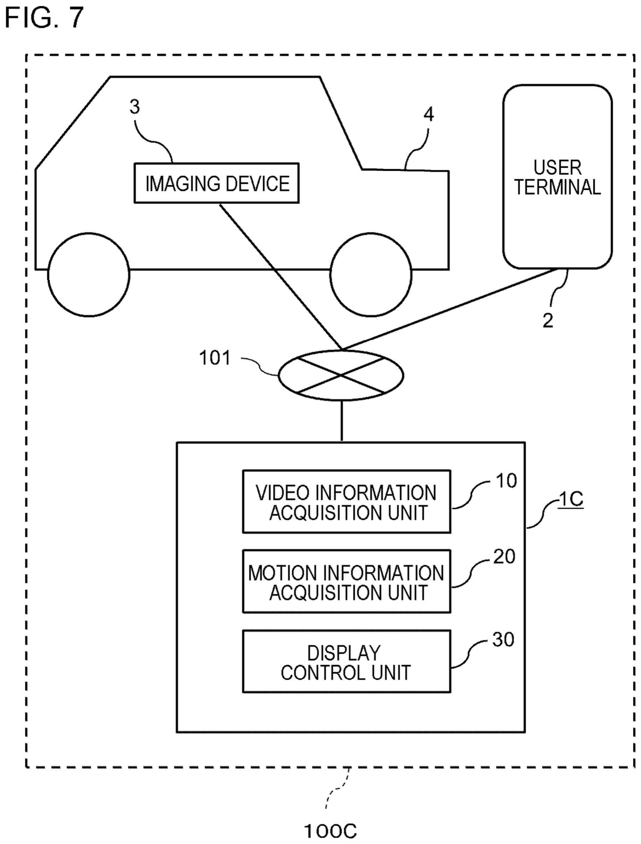

FIG. 7 is a block diagram for describing an information processing system 100C according to a third embodiment. The information processing device 1C according to the third embodiment, unlike the first embodiment, does not include the vibration control unit 40 and a part of the functions of the display control unit 30 is different from that of the first embodiment.

The display control unit 30 according to the third embodiment controls a display mode of the image 11 (see FIG. 2) to be displayed on the user terminal 2 by using the motion information. The motion information according to the third embodiment includes at least one of speed information related to the speed of the vehicle 4, acceleration information related to the acceleration of the vehicle 4, rotation speed information related to the rotation speed of the engine of the vehicle 4, and shift information related to the state of the transmission of the vehicle 4. The acceleration of the vehicle 4 includes at least one of an acceleration of the vehicle 4 in a traveling direction of the vehicle 4, an acceleration of the vehicle 4 in a width direction (lateral direction) of the vehicle 4, and an acceleration of the vehicle 4 in a vertical direction. A specific control example of the display mode will be described below.

### <Control Example 1 of Display Mode: Addition of Motion State Information>

### (Motion State Information Example 1)

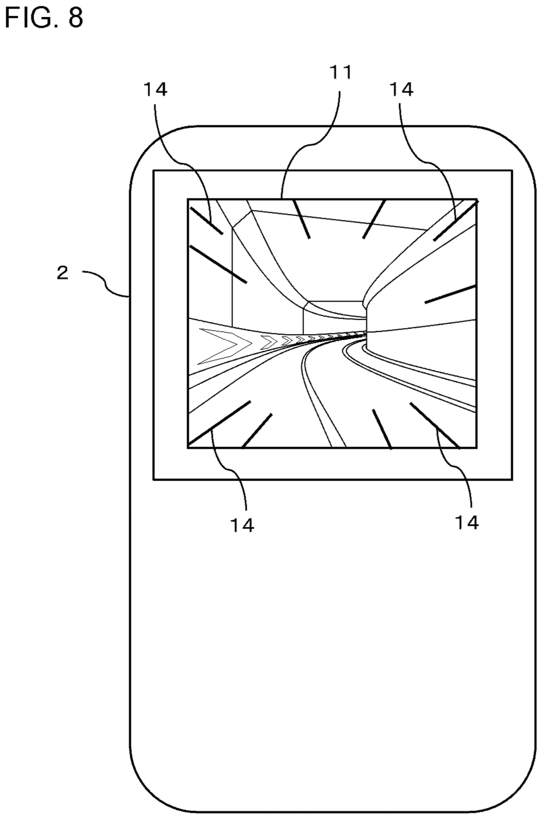

FIG. 8 is a diagram showing a motion state information example 1 added to the image 11 based on the video information. 14 in FIG. 8 is a radial object 14 that suggests acceleration of the vehicle 4. In FIG. 8, a plurality of radial objects 14 are added to the image 11 based on the video information. The display control unit 30 according to the third embodiment may control a display mode of the image 11 to be displayed on the user terminal 2 by adding the plurality of radial objects 14 to the image 11 using the motion information indicating that the vehicle 4 is accelerating in the traveling direction.

In other words, the display control unit 30 may control a display mode of the image 11 to be displayed on the user terminal 2 by adding the motion state information to the image 11 based on the video information and displaying the image 11. The motion state information is information indicating a state of a motion of the vehicle 4. The motion state information includes the radial object 14. The radial object 14 suggests a state in which the vehicle 4 accelerates in the traveling direction. The radial object 14 may be, for example, a line segment drawn as a center point of radiation near the center of the image 11 in a case where the imaging device 3 is installed in the vehicle 4 such that the imaging direction of the imaging device 3 is directed toward the front of the vehicle 4. By adding the radial object 14, the user can experience the situation in which the vehicle 4 is accelerated even in a case where the user is outside the vehicle 4.

In addition, the vehicle 4 or the imaging device 3 of the information processing system 100C according to the third embodiment may transmit the shift information related to the state of the transmission of the vehicle 4 to the information processing device 1C, in addition to or instead of the speed information related to the speed of the vehicle 4, the acceleration information related to the acceleration of the vehicle 4, and the rotation speed information related to the rotation speed of the engine of the vehicle 4. The imaging device 3 may transmit the shifting information acquired via the on-board diagnostics (OBD) interface of the vehicle 4 to the information processing device 1C as the motion information, and the motion information acquisition unit 20 may acquire the motion information transmitted from the imaging device 3. The display control unit 30 may change the motion state information using at least one of speed information related to a speed of the vehicle 4, acceleration information related to an acceleration of the vehicle 4, rotation speed information related to a rotation speed of an engine of the vehicle 4, and shift information related to a state of a transmission of the vehicle 4. An example of changing the motion state information will be described below.

### (Motion State Information Example 2)

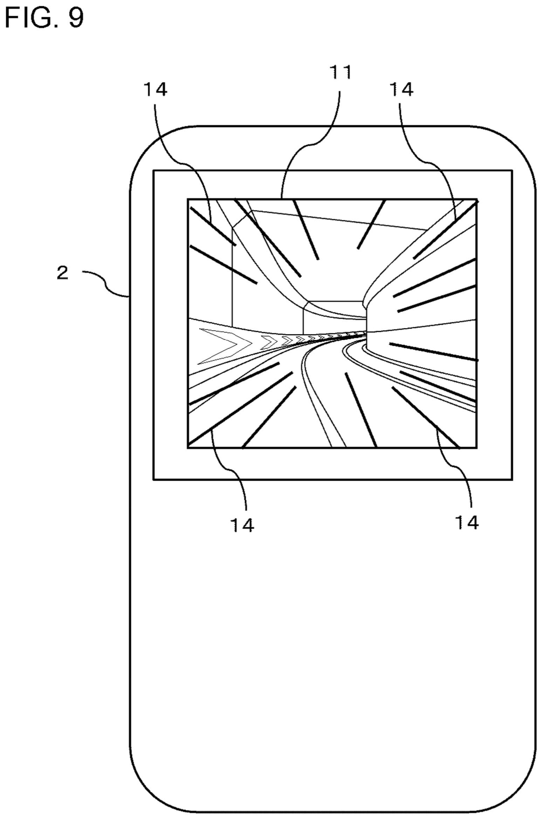

FIG. 9 is a diagram showing a motion state information example 2 added to the image 11 based on the video information. In FIG. 9, the number of radial objects 14 is larger than that in FIG. 8, and the length of the radial object 14 is longer. A state of FIG. 9 shows a state in which the acceleration (or the speed) of the vehicle 4 is larger than that in the state of FIG. 8. For example, the display control unit 30 may change the radial object 14 as the motion state information by increasing the number of radial objects 14 or increasing the length of the radial object 14 in a state where the vehicle 4 is gradually accelerating. In addition, for example, the color of the radial object 14 may be changed according to the acceleration of the vehicle 4 (the color may be changed to dark red as the acceleration increases). In addition, instead of changing the display mode of the radial object 14 according to the acceleration information of the vehicle 4, the display control unit 30 may consider that the vehicle 4 is accelerating in a case where the amount of change in the rotation speed of the engine of the vehicle 4 within a predetermined time is positive, and change the display mode of the radial object 14 in accordance with the amount of change. That is, in a case where the rotation speed of the engine of the vehicle 4 increases with the passage of time, the length of the radial object 14 may increase or the color of the radial object 14 may be changed on the assumption that the acceleration toward the traveling direction of the vehicle 4 increases.

### (Motion State Information Example 3)

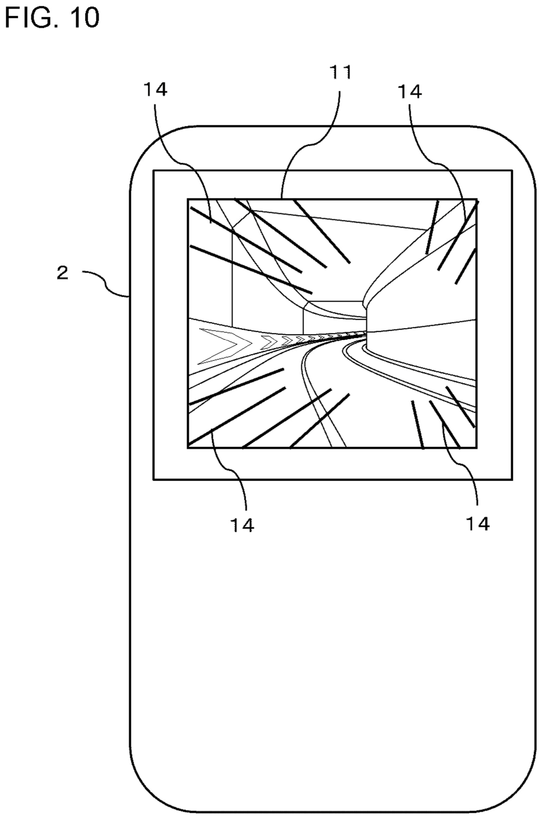

FIG. 10 is a diagram showing a motion state information example 3 added to the image 11 based on the video information. The radial object 14 in FIG. 8 (or FIG. 9) extends toward the vicinity of the center of the image 11, but the radial object 14 in FIG. 10 extends toward a portion eccentric to the right of the center of the image 11. As a result, the acceleration in the width direction (lateral direction) of the vehicle 4 can be expressed. In the example of FIG. 10, since the vehicle 4 is approaching a right curve, the vehicle 4 accelerates in a lateral direction of the vehicle 4 toward a center direction of an arc related to the right-hand curve. In the example of FIG. 10, the radial object 14 is eccentrically shifted to the right of the center of the image 11, and the acceleration of the vehicle 4 in the center direction of the arc is represented. In addition, the display control unit 30 may increase or decrease the amount of eccentricity of the radial object 14 according to the magnitude of the acceleration of the vehicle 4 in the lateral direction. That is, the display control unit 30 moves the center point of the radiation of the radial object 14 in the image 11 to the left and right in accordance with the direction of the acceleration of the vehicle 4 in the lateral direction, and for example, as the acceleration of the vehicle 4 in the left direction increases, the display control unit 30 moves the center point of the radiation of the radial object 14 in the image 11 to the right direction to be larger, and draws the radial object 14.

### (Motion State Information Example 4)

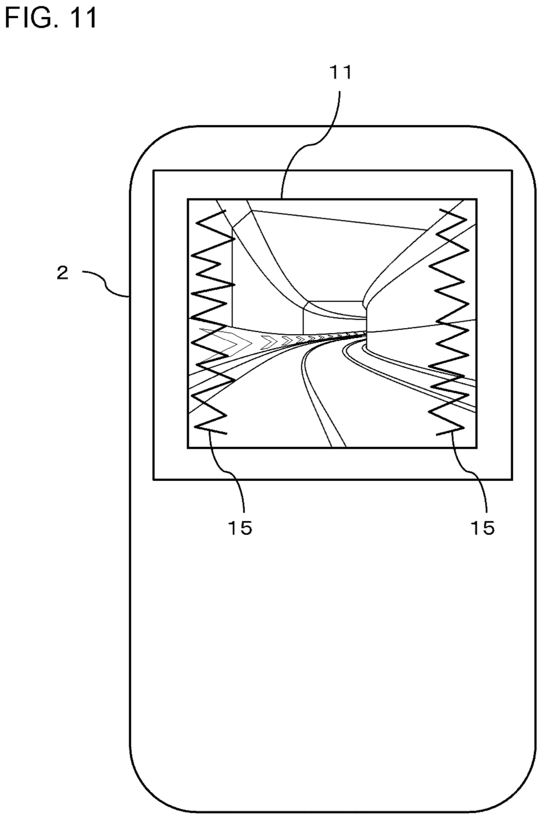

FIG. 11 is a diagram showing a motion state information example 4 added to the image 11 based on the video information. 15 in FIG. 11 is a zigzag-line object 15 indicating the vibration of the vehicle 4. In FIG. 11, a plurality of the zigzag-line objects 15 are added to the image 11 based on the video information. The display control unit 30 may control the display mode of the image 11 by adding the plurality of the zigzag-line objects 15 to the image 11 by using the motion information indicating that the vehicle 4 is accelerating in the vertical direction (the vehicle 4 is vibrating). In addition, the display control unit 30 may increase or decrease the number of the line segments of the zigzag-line object 15 according to the magnitude of the acceleration of the vehicle 4 in the vertical direction.

### (Motion State Information Example 5)

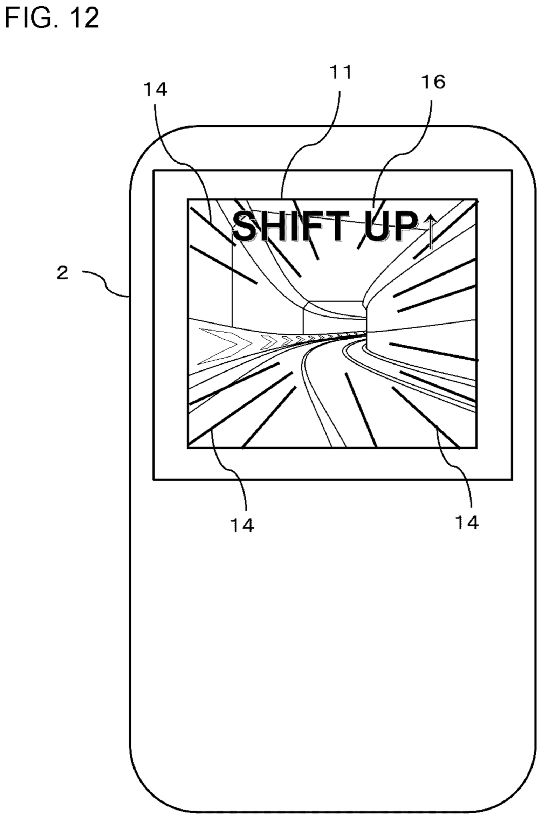

FIG. 12 is a diagram showing a motion state information example 5 added to the image 11 based on the video information. 16 in FIG. 12 is a shifting text information 16 that suggests the state of the transmission of the vehicle 4. In FIG. 12, the image 11 based on the video information is added with the shifting text information 16. The display control unit 30 may control the display mode of the image 11 by adding the shifting text information 16 to the image 11 using the motion information (the shifting information related to the state of the transmission of the vehicle 4) that the driver raises the gear. In addition, the display control unit 30 may add the radial object 14 in addition to adding the shifting text information 16 to the image 11.

### <Control Example 2 of Display Mode: Blur Processing>

### (Blur Processing Example 1)

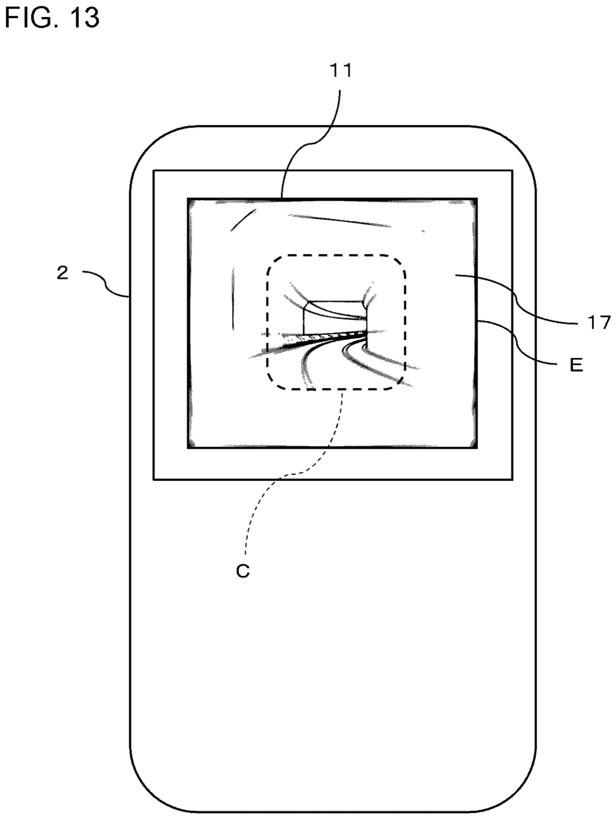

FIG. 13 is a diagram showing a blur processing example 1 performed on the image 11 based on the video information. The display control unit 30 according to the third embodiment may control a display mode of the image 11 to be displayed on the user terminal 2 by performing blur processing on the region 17 along the end E of the image 11 using the speed information. It is known that the field of view of the occupant (driver) is narrower as the speed of the vehicle 4 is higher in general, but in FIG. 13, the region 17 along the end E of the image 11 is blurred, and the vicinity of the center region C is displayed as usual, thereby expressing a state in which the field of view of the passenger (driver) is narrowed.

### (Blur Processing Example 2)

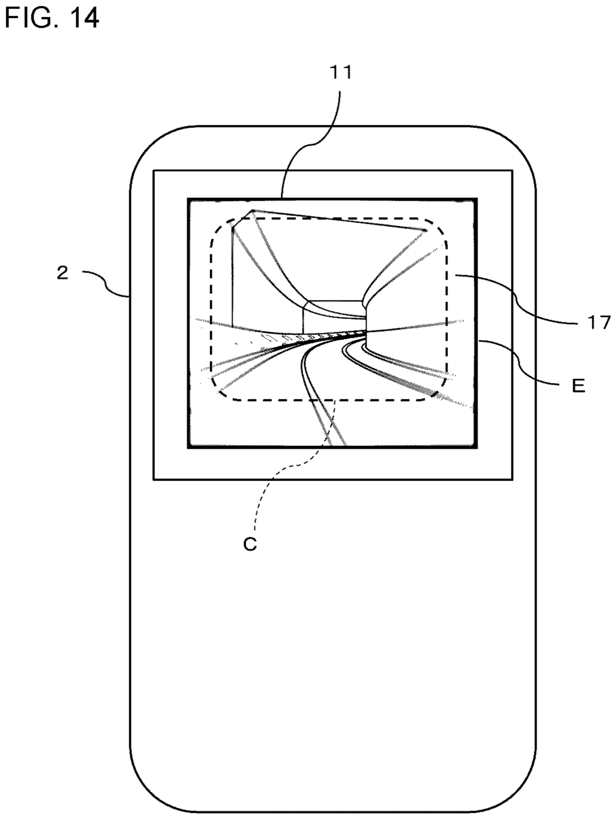

FIG. 14 is a diagram showing a blur processing example 2 performed on the image 11 based on the video information. In FIG. 14, the range of blurring is narrower than that in FIG. 13 (the size of the vicinity region C is larger than that in FIG. 13). A state of FIG. 14 shows a state in which the speed of the vehicle 4 is lower than the state of FIG. 13. That is, the display control unit 30 may adjust the blurring range to be larger as the speed of the vehicle 4 is higher.

### <Control Example 3 of Display Mode: Rotation of Image 11>

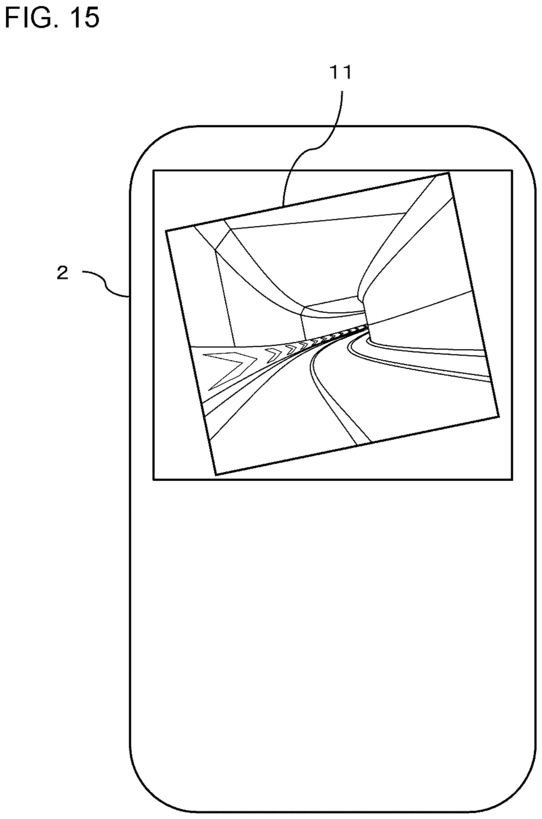

FIG. 15 is a diagram showing a state in which the image 11 based on the video information is rotated. In FIG. 15, the image 11 is inclined by being rotated counterclockwise as compared with FIG. 14 and the like. The display control unit 30 may control the display mode of the image 11 by rotating the image 11 using the acceleration information. The display control unit 30 may rotate the image 11 using, for example, acceleration information related to the acceleration of the vehicle 4 in the lateral direction.

In general, in a case where a vehicle travels along a curve, an occupant of the vehicle tilts the head in a direction opposite to the centrifugal force in order to resist the centrifugal force. More specifically, in a case of the right-hand curve traveling, a centrifugal force in the left direction is generated in the vehicle 4, and the occupant of the vehicle 4 tilts the head in the right direction opposite to the direction of the centrifugal force. FIG. 15 shows scenery that is visually recognized in a case where the occupant tilts the head. As described above, the display control unit 30 may rotate the image 11 by using the acceleration information related to the acceleration of the vehicle 4 in the lateral direction. In FIG. 15, the end part of the image 11 is displayed on the display of the user terminal 2. However, the end part of the image 11 may not be displayed on the display of the user terminal 2 even in a case where the image 11 is rotated by enlarging the image 11 in advance and displaying the image 11 on the display of the user terminal 2.

### (Operation Example of Third Embodiment)

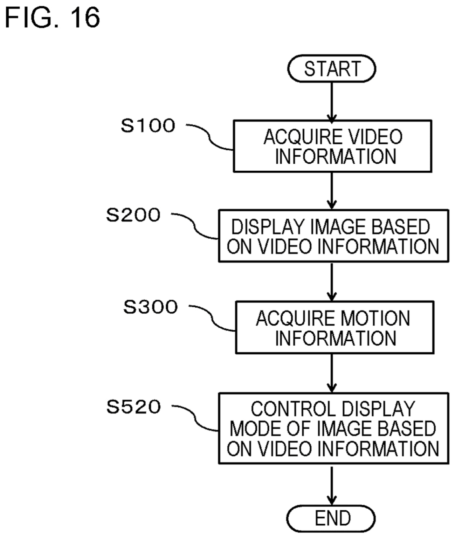

FIG. 16 is a flowchart showing processing of an information processing system 100C according to the third embodiment. Steps S100 to S300 are the same as those in the first embodiment. In step S520 after step S300, the display control unit 30 controls the display mode of the image 11 by using the motion information.

For example, in step S300, it is assumed that the motion information acquisition unit 20 acquires acceleration information related to the acceleration of the vehicle 4 in the lateral direction of the vehicle 4 as the motion information (it is assumed that the motion information acquisition unit 20 acquires acceleration information in the right direction (the direction of the center of the arc) with respect to the traveling direction of the vehicle 4). In this case, in step S520, the display control unit 30 may rotate the image 11 counterclockwise using the motion information as the acceleration information of the vehicle 4 in the right direction to control the display mode of the image 11.

In addition, the processing of controlling the display mode of the image 11 using the motion information is as described above.

As described above, the information processing system 100C according to the third embodiment includes the video information acquisition unit 10, the motion information acquisition unit 20, and the display control unit 30, and the display control unit 30 controls the display mode of the image 11 to be displayed on the user terminal 2 by using the motion information. Since the display mode of the image 11 displayed on the user terminal 2 is changed according to the actual motion (speed, acceleration, engine rotation speed, state of the transmission, and the like) of the vehicle 4, the user can obtain a sense of presence as if the user were actually riding on the vehicle 4 even outside the vehicle 4.

Further, the motion information includes at least one of speed information related to a speed of the vehicle 4, acceleration information related to an acceleration of the vehicle 4, rotation speed information related to a rotation speed of an engine of the vehicle 4, and shift information related to a state of a transmission of the vehicle 4. Accordingly, it is possible to easily acquire information regarding the motion of the vehicle 4.

Further, the display control unit 30 controls a display mode of the image 11 to be displayed on the user terminal 2 by adding the motion state information to the image 11 and displaying the image 11. In addition, the display control unit 30 changes the motion state information by using at least one of the speed information, the acceleration information, the rotation speed information, and the shifting information. As a result, the user can more effectively obtain a sense of presence as if the user were actually riding on the vehicle 4 even outside the vehicle 4.

Further, the display control unit 30 controls a display mode of the image 11 by performing blur processing on a region along an edge of the image 11 using at least one of the speed information, the acceleration information, and the rotation speed information. As a result, the size of the field of view of the occupant can be expressed on the user terminal 2.

Further, the display control unit 30 controls a display mode of the image 11 by rotating the image 11 using the acceleration information. As a result, the scenery visually recognized by the occupant can be expressed on the user terminal 2.

Although the embodiments have been described above with reference to the drawings, these are examples of the present invention, and various configurations other than the above can also be adopted.

In the first embodiment, all of the functions related to the video information acquisition unit 10, the motion information acquisition unit 20, the display control unit 30, and the vibration control unit 40 are provided in the information processing device 1A, but some or all of the functions may be mounted on the user terminal 2. For example, in the first embodiment, the user terminal 2 may include the video information acquisition unit 10. The same applies to the second embodiment and the third embodiment.

In the first embodiment, the information processing device 1A may further include an output sound control unit 50. The functions and effects of the output sound control unit 50 according to the first embodiment are as described in the second embodiment. In addition, in the second embodiment, the information processing device 1B may further include a vibration control unit 40. The functions and effects of the vibration control unit 40 according to the second embodiment are as described in the first embodiment. In addition, in the third embodiment, the information processing device 1C may further include at least one of the vibration control unit 40 and the output sound control unit 50. The functions and effects of the vibration control unit 40 and the output sound control unit 50 according to the third embodiment are as described in the first embodiment and the second embodiment.

Hereinafter, examples of the reference forms will be added.
1. An information processing system including:
   a video information acquisition unit that acquires video information related to a video captured by an imaging device that moves together with a vehicle;
   a motion information acquisition unit that acquires motion information related to a motion of the vehicle when the imaging device captures the video; and
   a display control unit that causes a user terminal located outside the vehicle to display an image based on the video information,
   in which the display control unit controls a display mode of the image to be displayed on the user terminal, using the motion information.
2. The information processing system according to 1.,
   in which the motion information includes at least one of speed information related to a speed of the vehicle, acceleration information related to an acceleration of the vehicle, rotation speed information related to a rotation speed of an engine of the vehicle, and shift information related to a state of a transmission of the vehicle.
3. The information processing system according to 1. or 2., in which the display control unit controls a display mode of the image to be displayed on the user terminal by adding and displaying motion state information that suggests a state of the motion on the image.
4. The information processing system according to 3.,
   in which the motion information includes at least one of speed information related to a speed of the vehicle, acceleration information related to an acceleration of the vehicle, rotation speed information related to a rotation speed of an engine of the vehicle, and shift information related to a state of a transmission of the vehicle, and
   the display control unit changes the motion state information using at least one of the speed information, the acceleration information, the rotation speed information, and the shift information.
5. The information processing system according to 2.,
   in which the display control unit controls a display mode of the image to be displayed on the user terminal by performing blur processing on a region along an edge of the image using at least one of the speed information, the acceleration information, and the rotation speed information.
6. The information processing system according to 2.,
   in which the display control unit controls a display mode of the image to be displayed on the user terminal by rotating the image using the acceleration information.
7. The information processing system according to 1. or 6., further including:
   a vibration control unit that controls vibration of the user terminal using the motion information acquired by the motion information acquisition unit.
8. The information processing system according to 1. or 7., further including:
   an output sound control unit that controls a sound to be output to the user terminal using the motion information acquired by the motion information acquisition unit.
9. An information processing system control method including:
   via a computer,
   acquiring video information regarding a video captured by an imaging device that moves together with a vehicle;
   acquiring motion information regarding a motion of the vehicle when the imaging device captures the video;
   displaying an image based on the video information on a user terminal located outside the vehicle; and
   controlling a display mode of the image to be displayed on the user terminal, using the motion information.
10. A program causing a computer to execute:
   a procedure of acquiring video information regarding a video captured by an imaging device that moves together with a vehicle;
   a procedure of acquiring motion information regarding a motion of the vehicle when the imaging device captures the video;
   a procedure of displaying an image based on the video information on a user terminal located outside the vehicle; and
   a procedure of controlling a display mode of the image to be displayed on the user terminal using the motion information.

### REFERENCE SIGNS LIST

1A, 1B, 1C information processing device
2 user terminal
3 imaging device
4 vehicle
10 video information acquisition unit
20 motion information acquisition unit
30 display control unit
40 vibration control unit
50 output sound control unit
60 vehicle type information acquisition unit
100A, 100B, 100C information processing system
101 communication network
1010 bus
1020 processor
1030 memory
1040 storage device
1050 input and output interface
1060 network interface

## Claims

1. An information processing system comprising:
a video information acquisition unit that acquires video information related to a video captured by an imaging device that moves together with a vehicle;
a motion information acquisition unit that acquires motion information related to a motion of the vehicle when the imaging device captures the video; and
a display control unit that causes a user terminal located outside the vehicle to display an image based on the video information,
wherein the display control unit controls a display mode of the image to be displayed on the user terminal, using the motion information.

2. The information processing system according to Claim 1,
wherein the motion information includes at least one of speed information related to a speed of the vehicle, acceleration information related to an acceleration of the vehicle, rotation speed information related to a rotation speed of an engine of the vehicle, and shift information related to a state of a transmission of the vehicle.

3. The information processing system according to Claim 1 or 2,
wherein the display control unit controls a display mode of the image to be displayed on the user terminal by adding and displaying motion state information that suggests a state of the motion on the image.

4. The information processing system according to Claim 3,
wherein the motion information includes at least one of speed information related to a speed of the vehicle, acceleration information related to an acceleration of the vehicle, rotation speed information related to a rotation speed of an engine of the vehicle, and shift information related to a state of a transmission of the vehicle, and
the display control unit changes the motion state information using at least one of the speed information, the acceleration information, the rotation speed information, and the shift information.

5. The information processing system according to Claim 2,
wherein the display control unit controls a display mode of the image to be displayed on the user terminal by performing blur processing on a region along an edge of the image using at least one of the speed information, the acceleration information, and the rotation speed information.

6. The information processing system according to Claim 2,
wherein the display control unit controls a display mode of the image to be displayed on the user terminal by rotating the image using the acceleration information.

7. The information processing system according to Claim 1 or 2, further comprising:
a vibration control unit that controls vibration of the user terminal using the motion information acquired by the motion information acquisition unit.

8. The information processing system according to Claim 1 or 2, further comprising:
an output sound control unit that controls a sound to be output to the user terminal using the motion information acquired by the motion information acquisition unit.

9. An information processing system control method comprising:
via a computer,
acquiring video information regarding a video captured by an imaging device that moves together with a vehicle;
acquiring motion information regarding a motion of the vehicle when the imaging device captures the video;
displaying an image based on the video information on a user terminal located outside the vehicle; and
controlling a display mode of the image to be displayed on the user terminal, using the motion information.

10. A program causing a computer to execute:
a procedure of acquiring video information regarding a video captured by an imaging device that moves together with a vehicle;
a procedure of acquiring motion information regarding a motion of the vehicle when the imaging device captures the video;
a procedure of displaying an image based on the video information on a user terminal located outside the vehicle; and
a procedure of controlling a display mode of the image to be displayed on the user terminal using the motion information.
